# EUROPÄISCHE PATENTSCHRIFT

(11) **EP 2 807 350 B1**
(45) Veröffentlichungstag und Bekanntmachung des Hinweises auf die Patenterteilung: **02.01.2019**
(21) Anmeldenummer: 13700066.7
(22) Anmeldetag: 04.01.2013
(51) Int. Cl.: F01N 3/20

(54) **DICHTUNG FÜR EINE EINRICHTUNG ZUM NACHBEHANDELN VON ABGASEN EINER BRENNKRAFTMASCHINE**
SEAL FOR AN EXHAUST AFTERTREATMENT DEVICE IN AN INTERNAL COMBUSTION ENGINE
JOINT POUR UN DISPOSITIF DE RETRAITEMENT DE GAZ D'ÉCHAPPEMENT D'UN MOTEUR À COMBUSTION INTERNE

(30) Priorität: 27.01.2012 DE 102012201189
(43) Veröffentlichungstag der Anmeldung: 03.12.2014
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE)
(86) Internationale Anmeldenummer: PCT/EP2013/050074
(87) Internationale Veröffentlichungsnummer: WO 2013/110483

(56) Entgegenhaltungen:
- WO-A1-2012/152466
- WO-A1-2012/175285
- WO-A1-2013/075950
- WO-A1-2013/076112
- DE-A1-102008 055 080
- DE-A1-102009 027 185
- DE-A1-102009 027 693

## Beschreibung

### Stand der Technik

Die Erfindung betrifft eine Dichtung für eine Einrichtung zum Nachbehandeln von Abgasen einer Brennkraftmaschine.

Bei Dosiervorrichtungen für z.B. DENOX-Systeme wird ein Dosiermodul verwendet, welches ein Dosierventil zum Einspritzen des Reduktionsmittels in den Abgasbereich enthält und eine Anbindung von hydraulischen Komponenten sowie die Kühlung der Einheit übernimmt. Das Dosiermodul weist zur Anbindung an den Abgasbereich einen Flansch auf, welcher auf einen Abgasrohrgegenflansch aufgeflanscht wird. Wegen Fertigungstoleranzen und Rauigkeiten des Abgasrohrgegenflansches besteht die Gefahr undichter Stellen insbesondere beim Übergang des Inneren des Abgasrohrs zu dem Außenraum. Bei DENOX-Systemen wird üblicherweise das Reduktionsmittel AdBlue eindosiert, welches sich durch sehr hohe Kriecheigenschaften auszeichnet. Im Falle eines Austritts des Reduktionsmittels bilden sich weiße Kristalle an der Außenseite der Dosiervorrichtung. Hierbei austretendes Ammoniak ist giftig. Eine besondere Herausforderung bei einer solchen Einrichtung zur Nachbehandlung von Abgasen stellt daher die Abdichtung des Innenraums der Abgasanlage zur Umgebung dar, nicht nur wegen der Abgase sondern insbesondere wegen des Reduktionsmittels.

Um den Austritt der Abgase und des Reduktionsmittels zu verhindern, ist aus der DE 10 2006 061 730 A1 bekannt, eine Dichtung zwischen dem Abgasrohr und der Dosiervorrichtung anzubringen, die ein Dichtelement umfasst, das flächig auf einem Flansch des Dosiermoduls und auf einem Gegenflansch des Abgasrohrs aufliegt. Die Befestigung des Dosiermoduls erfolgt über eine V-Schelle, welche einen Flansch des Abgasrohrs mit einer Haltestruktur für das Dosiermodul kraftschlüssig verbindet.

Aus der US 6,814,303 B2 ist eine flüssigkeitsgekühlte Halterung für einen Injektor bekannt, mit dem eine Harnstoffwasserlösung in einen Abgasstrang eingebracht wird. Dabei sitzt der Injektorkörper auf schrägen Innenwänden eines Montagestückes auf, wobei an der Kontaktstelle eine Dichtung vorgesehen ist, die als O-Ring oder als Flachdichtung ausgebildet sein kann. Als weiteren Stand der Technik gilt die DE 10 2009 027 185 A1, sowie die nachveröffentlichten WO2012/152466 oder WO2013/076112.

### Offenbarung der Erfindung

Erfindungsgemäß wird eine Verbindungsanordnung umfassend ein Dosiermodul, eine Schelle, ein Dichtelement und einen Anschlussflansch vorgeschlagen. Das Dosiermodul dient im Einbringen eines Reduktionsmittels in einem Abgastrakt einer Verbrennungskraftmaschine zur Nachbehandlung von Abgasen. Das Dosiermodul ist mittels der Schelle an den Anschlussflansch eines Abgasrohrs des Abgastrakts befestigbar und umfasst einen Flansch, der am Anschlussflansch des Abgasrohres befestigt wird, wobei zwischen dem Flansch und dem Anschlussflansch das Dichtelement angeordnet ist, welches einen Innenraum des Dosiermoduls von einem Außenraum trennt und welches insbesondere einlagig ausgebildet ist. Weiterhin ist das Dichtelement bezogen auf eine Längsachse des Dosiermoduls auf Höhe des Massenschwerpunktes des Dosiermodules aufgenommen.
Dies erlaubt insbesondere eine schwingungsreduzierte und festigkeitsoptimierte Anbindung des erfindungsgemäß vorgeschlagenen Dosiermodules an die Abgasanlage. Da der Massenschwerpunkt des Dosiermodules in der Regel weiter oben im Dosiermodul liegt, ist die Abdichtfläche weiter weg von der Stelle entfernt, an der an der Ventilspitze des Dosiermodules durch das Dosierventil das Reduktionsmittel in den Abgastrakt eingebracht wird.
Das Dichtelement umfasst zumindest eine um das Dichtelement umfänglich verlaufende Linie hohen Drucks zwischen aufeinander treffenden Materialien. Sie kann auch mehrere umfänglich verlaufende Linien hohen Drucks zwischen aufeinander treffenden Materialien umfassen, die insbesondere kreisförmig sein können und konzentrisch zueinander angeordnet sein können. Bevorzugt umfasst die Liniendichtung zumindest eine umfänglich verlaufende Linie hohen Drucks zwischen dem Dichtelement und dem Flansch des Dosiermoduls und zumindest eine weitere umfänglich verlaufende Linie hohen Drucks zwischen dem Dichtelement und dem Anschlussflansch des Abgasrohrs, so dass ein Austritt der Abgase oder des Reduktionsmittels aus dem Inneren des Abgasrohrs in den Außenraum zwischen dem Dichtelement und dem Flansch des Dosiermoduls und zwischen dem Dichtelement und dem Gegenflansch des Abgasrohrs verhindert wird. Die umfänglich verlaufenden Linien hohen Drucks können insbesondere kreisförmige Linien sein und konzentrisch zueinander verlaufen.

Bei der Liniendichtung ist vorteilhaft, dass auf einer Dichtlinie höhere Drücke zwischen den Materialien einstellbar sind, als dies beispielsweise bei einer Flächendichtung über deren gesamte Dichtfläche möglich wäre. Über die Liniendichtung werden der Flansch und der Anschlussflansch des Abgasrohres entlang der Dichtlinie linienförmig mit hohen Kräften beaufschlagt, was dazu führt, dass trotz Fertigungstoleranzen und Rauigkeiten des Anschlussflansches keine Undichtigkeiten zur Umgebung entstehen.

Gemäß einer bevorzugten Ausführungsform ist das Dichtelement als eine insbesondere metallische Sicke oder Halbsicke ausgeführt. Die Sicken werden beispielsweise durch Stanzen oder in einem Tiefziehverfahren und/oder manuell mit einem Sickenhammer und/oder einem Sickenstock und/oder maschinell mit einer Sickenmaschine mit Hilfe zweier Sickenrollen in das Material eingebracht und erlauben eine sehr kostengünstige Fertigung des Dichtelements.

Die Ausführung als Vollsicke oder als Halbsicke bewirkt, dass im montierten Zustand zumindest zwei Mikroknicks entstehen, die die Liniendichtung bilden. Zumindest ein erster Mikroknick verläuft im Dichtelement in Richtung auf den Flansch des Dosiermoduls und zumindest ein zweiter Mikroknick verläuft im Dichtelement in Richtung auf den Anschlussflansch des Abgasrohrs. Im eingebautem Zustand bewirkt die Verspannung des als Halbsicke oder Vollsicke ausgebildeten Dichtelementes zwischen dem Flansch und dem Anschlussflansch, dass der erste Mikroknick mit dem Flansch des Dosiermoduls eine erste Dichtlinie für den Innenraum des Abgasrohrs in den Außenraum bildet und der zweite Mikroknick mit dem Anschlussflansch des Abgasrohrs eine zweite Dichtlinie für den Innenraum des Abgasrohrs in den Außenraum bildet. Dies wird im Sinne der vorliegenden Erfindung gemeinsam als Liniendichtung bezeichnet. Somit ist weder auf Seiten des Dosiermoduls noch auf Seiten des Abgasrohrs trotz auftretender Fertigungstoleranzen ein Austritt des Reduktionsmittels in die Umgebung möglich. Bevorzugt ist die Halbsicke bzw. die Vollsicke um einen gleichen Winkel gegenüber einer Radialebene geneigt wie eine geneigte Fläche des Flansches am Dosiermodul und/oder des Anschlussflansches am Abgasrohr.

Bevorzugt ist das Dichtelement als ein einlagiger Materialring, insbesondere als einlagiger Metallring ausgebildet. Besonders vorteilhaft ist, dass bei einer einlagigen Ausführung des Dichtelements Kosten vermieden werden, welche durch die Herstellung einer Doppellage und ggf. einer zusätzlich notwendigen Bördelung entstehen. Die einlagige Ausführungsform ist insbesondere dann vorteilhaft, wenn radial nur sehr wenig Platz zur Verfügung steht, was an dem Anschlussflansch häufig der Fall ist. Durch den einlagig ausgeführten Metallring kann eine effektive Dichtung bereits bei einer radialen Ausdehnung einer Dichtfläche des Anschlussflansches von 4 mm bereitgestellt werden, aber auch bei größeren radialen Ausdehnungen. Ein mehrlagig, insbesondere zweilagig ausgeführter Metallring ließe sich auf diesem engen Bereich unter Umständen nicht zu einem wirksamen Liniendichtelement verformen. Bei einem mehrlagig, insbesondere zweilagig ausgeführten Metallring existiert zudem auch ein Spalt zwischen den Metallringen, was eine weitere potenziell undichte Stelle zur Umgebung bedeuten kann.

Bevorzugt weist das Dichtelement Haltenasen auf, welche sich gegen eine Wand des Dosiermoduls abstützen. Die Haltenasen sind insbesondere beim Transport des Dosiermoduls praktisch, da das Dosiermodul mit bereits eingesetztem Dichtelement an den Montageort verbracht werden kann. Hierdurch wird außerdem eine Vorzentrierung des Dichtelements erreicht, so dass die beiden sich ausbildenden Dichtlinien am Flansch und am Anschlussflansch über den Umfang eine gleichmäßige Abdichtung bewirken.

Bevorzugt weist der Flansch des Dosiermoduls zumindest eine geneigte Flanschfläche auf, wobei der Neigungswinkel zwischen 10° und 45°, bevorzugt zwischen 15° und 25°, besonders bevorzugt etwa 20° gegenüber einer Radialebene verläuft. Der Winkel ist dabei bevorzugt so gewählt, dass der Flansch zu seinem äußeren Umfang hin spitz zuläuft. Alternativ kann der Winkel auch so gewählt sein, dass der Flansch zu seinem Zentrum hin spitz zuläuft. Die Radialebene kann durch eine Austrittsöffnung des Anschlussflansches definiert sein, oder durch eine Stirnfläche des Flansches. Die Radialebene kann auch so definiert sein, dass sie im Wesentlichen senkrecht zum Injektor liegt, bzw. zu einer Hauptachse des Einspritzventils.

Bevorzugt weist der Anschlussflansch dieselbe Neigung auf, wie der geneigte Flanschabschnitt des Dosiermoduls, nämlich zwischen 10° und 45°, bevorzugt 15° bis 25°, besonders bevorzugt 20°. Der Winkel ist dabei bevorzugt so definiert, dass der Anschlussflansch des Abgasrohrs zu seinem Zentrum hin spitz zuläuft, kann aber auch so gewählt sein, dass der der Gegenflansch des Abgasrohrs seinem äußeren Umfang hin spitz zuläuft.

Besonders vorteilhaft ist, dass bei geneigter Flansch- und Anschlussflanschfläche ein geringerer Platzbedarf besteht, verglichen mit horizontal ausgeführten Dichtungen, bei welchen die Dichtflächen des Flansches und des Anschlussflansches im Wesentlichen in der Radialebene verlaufend ausgeführt sind. Dadurch erreicht man im gleichen radialen Bauraum eine effektiv erhöhte Dichtfläche im Vergleich zu einer horizontalen Ausführung. Die Neigung des Flansches und des Anschlussflansches erlauben eine radiale Verkürzung des Dichtelements um einen Faktor, der dem Cosinus des eingeschlossenen Winkels entspricht, bzw. eine effektive Verlängerung des Dichtelements um Eins geteilt durch den Faktor. Dies ist insbesondere dann vorteilhaft, wenn die radiale Breite des Anschlussflansches begrenzt ist.

Bevorzugt werden der Flansch und der Anschlussflansch mittels der Schelle gehalten, die sie gegeneinander verspannt. In einer bevorzugten Ausführungsform weist die Schelle Anpressflanken auf, welche vollflächig auf der Außenfläche des Dosiermodulflanschs aufliegen. Bevorzugt ist die Dichtfläche des Dosiermoduls außerdem um den gleichen Winkel wie die Anpressflanke der Schelle geneigt. Hierdurch wird eine optimale Kraftübertragung, nämlich eine axiale Verspannung von Flansch und Anschlussflansch erreicht, was die Dichtheit der Abdichtung erhöht. Durch die direkte Einleitung der Schellenkraft wird eine Kraftumlenkung vermieden und eine Erhöhung der Dichtkraft bei Verwendung der gleichen Schelle erzielt.

Bevorzugt umfasst das Dosiermodul eine Kühlvorrichtung, die den Flansch zum Anschluss an den Anschlussflansch des Abgasrohrs aufweist. Die Erfindung ist insbesondere für flüssigkeitsgekühlte Dosiermodule geeignet, da bei diesen eine abgasnahe Positionierung realisierbar ist. Das Kühlfluid, welches entweder dem Kühlkreislauf des Fahrzeugs entnommen werden kann, oder ein in einem separaten Kreis zirkulierendes Medium sein kann, ermöglicht einen effizienten Abtransport der Wärme aus dem Ventilspitzenbereich, der über eine Luftkühlung nicht realisierbar ist. Hierdurch ist es möglich, die Ventilspitze nahe an den Abgasstrom des Abgasrohrs heranzuführen. Bei einem flüssigkeitsgekühlten Dosiermodul kann das Dichtelement in den Bereich einer Kühlkammer verlegt werden. Durch die Positionierung des Dosiermoduls mit der Ventilspitze im Abgaskanal, insbesondere durch die hohen Temperaturen und ggf. zusätzlich durch eine gezielte Ableitung durch einen Hitzeschild, kann außerdem sehr effektiv verhindert werden, dass das Reduktionsmittel, beispielsweise "AdBlue®" an den Dichtbereich herankommt, so dass die Anforderungen an die Dichtung sogar verringert sein können. Diesem kann bei der Dimensionierung des Dichtelements Rechnung getragen werden, insbesondere bei Festlegung der Stärke und bei der Wahl des Materials. So kann sich hier eine einlagige Metallhalbsicke oder eine einlagige Metallsicke sehr gut dazu eignen, den Austritt des Reduktionsmittels aus dem Inneren des Abgasrohrs effektiv zu verhindern.

### Vorteile der Erfindung

Durch die erfindungsgemäß vorgeschlagene Lösung wird bei einem Dosiermodul zur Eindosierung eines Reduktionsmittels in den Abgasstrang einer Verbrennungskraftmaschine, welches insbesondere als ein flüssigkeitsgekühltes Dosiermodul ausgeführt ist, der Dichtbereich nicht im Bereich der Ventilspitze positioniert, sondern weiter nach oben in Richtung des Massenschwerpunktes des Dosiermodules verlegt. Dadurch wird eine schwingungsreduzierte und festigkeitsoptimierte Anbindung des erfindungsgemäß vorgeschlagenen Dosierventils an die Abgaslage erreicht. Zusätzlich kann durch die erfindungsgemäß vorgeschlagene Lösung eine größere Distanz zwischen dem Austritt des Reduktionsmittels aus dem Dosiermodul und dem Dichtbereich erreicht werden. Dadurch sind die Anforderungen an das Dichtkonzept geringer, so dass es möglich ist, von einer bisher eingesetzten zweilagigen beschichteter Metallsickendichtung auf eine einlagige, unbeschichtete Metallsickendichtung überzugehen.
Weiterhin kann durch die erfindungsgemäß vorgeschlagene Lösung in vorteilhafter Weise die Dichtfläche am Dosiermodul genau um den gleichen Winkel wie ein Schellenprofil geneigt ausgebildet werden. Dadurch erreicht man im gleichen radialen Bauraum eine erhöhte Dichtfläche im Vergleich zu einer horizontalen Ausführung. Zusätzlich wird durch die direkte Einleitung der Kraft einer Schelle eine Kraftumlenkung vermieden und somit eine Erhöhung der Dichtkraft bei Verwendung der gleichen Schelle erreicht.
Das Dichtelement zwischen dem Flansch des Dosiermoduls und dem Anschlussflansch des Abgasrohres liegt erfindungsgemäß in der Nähe des Massenschwerpunktes des Dosiermoduls.
Bei der Lage Massenschwerpunkt kommt es in diesem Zusammenhang nur auf dessen axiale Lage
an, d.h. die Lage in Bezug auf die Höhe des Dosiermoduls, die radiale Position des Massenschwerpunkts ist unerheblich.

Insbesondere bei dem vorgestellten flüssigkeitsgekühlten Dosiermodul ist es möglich, den Dichtbereich in die Nähe des Massenschwerpunktes zu verlegen. Somit wird der Hebel auf die Dichtung kleiner, so dass die Anforderungen an die Dichtung verringert sein können. Diesem kann bei der Dimensionierung des Dichtelements Rechnung getragen werden, insbesondere bei Festlegung der Stärke und bei der Wahl des Materials. Dadurch erhält man eine schwingungsreduzierte und festigkeitsoptimierte Anbindung an die Abgasanlage. So kann beispielsweise eine einlagige Metallhalbsicke oder eine einlagige Metallsicke sich sehr gut dazu eignen, die Liniendichtung in der Nähe des Massenschwerpunkts zu vermitteln.

### Kurze Beschreibung der Zeichnungen

Es zeigen
- Figur 1: ein auf einem Abgasrohrgegenflansch aufgeflanschtes Dosiermodul in Schnittansicht
- Figur 2: eine Teilansicht der Figur 1 mit der Dichtung zwischen Flansch und Gegenflansch
- Figur 3: eine Dichtung mit einem Flansch und einem Gegenflansch und einem Halbsickendichtelement
- Figur 4: eine weitere Dichtung mit einem Flansch und einem Gegenflansch und einem Vollsickendichtelement
- Figur 5: eine weitere Dichtung mit einem Flansch und einem Gegenflansch und einem zweilagigen Dichtelement und
- Figur 6: ein Dichtelement in Draufsicht.

### Ausführungsformen der Erfindung

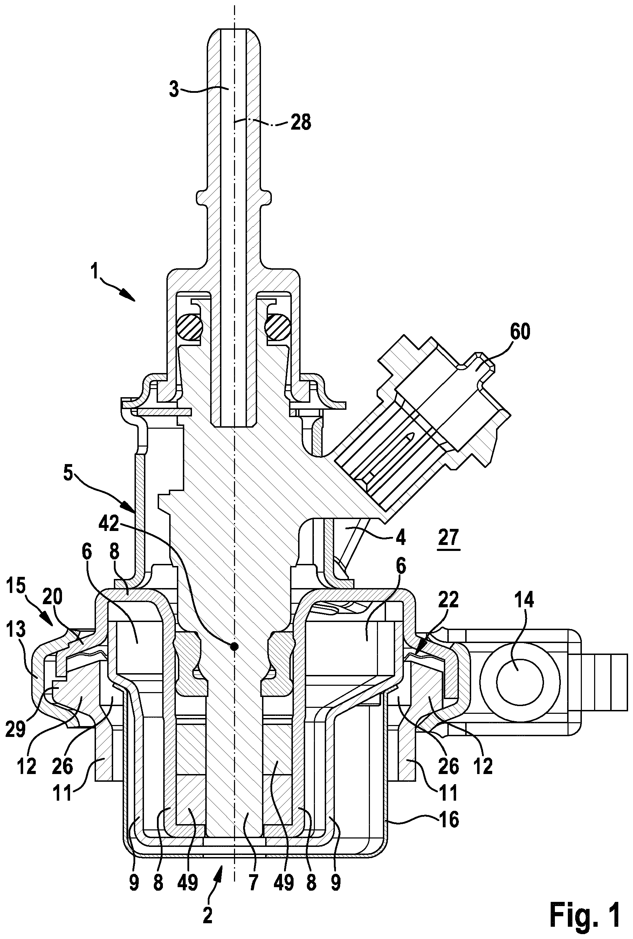

Figur 1 zeigt ein an einem Anschlussflansch 11 eines Abgasrohrs angeflanschtes Dosiermodul 1 in Schnittansicht. Das Dosiermodul 1 ist ausgebildet, einen Abgasstrom einer Brennkraftmaschine durch Injektion eines Reduktionsmittels in das Abgasrohr der Brennkraftmaschine nachzubehandeln. Hierzu mündet eine Austrittsöffnung 2 eines Einspritzventils 5, das im Detail nicht dargestellt ist, in das Abgasrohr der Brennkraftmaschine. Vom Abgasrohr ist lediglich der Anschlussflansch 11 dargestellt, welcher einen umlaufenden, im Querschnitt verbreiterten Flanschkopf 12 aufweist. In Figur 1 ist ein Schnittverlauf dargestellt, wobei der Schnitt links durch eine von mehreren Rastnasen 29 verläuftt.

Das Dosiermodul 1 weist mindestens einen Zulauf 3 für ein Reduktionsmittel auf, beispielsweise für AdBlue®, und für Druckluft, mit welcher das Reduktionsmittel zerstäubt wird, sowie einen weiteren Zulauf 4 für ein Kühlfluid, der in eine Kühlkammer 6 mündet, die einen Ventilspitzenbereich 7 des Einspritzventils 5 umgibt. Die Kühlkammer 6 ist aus zwei miteinander stoffschlüssig verbundenen Hülsen, nämlich einer Innenhülse 8 und einer Außenhülse 9 gebildet. Die Hülsen 8, 9 können auch über einen Formschluss miteinander verbunden sein, beispielsweise durch einen Presssitz. Zwischen der Innenhülse 8 und dem Ventilspitzenbereich 7 sind weiche, plastisch verformbare Elemente 49 wie z. B. Graphitblöcke angeordnet, die eine Fertigungstoleranz des Ventilspitzenbereichs 7 ausgleichen und Querkräfte aufnehmen können. In alternativen Ausführungsformen der Erfindung können passgenaue Führungen des Ventilspitzenbereichs 7 an der Innenhülse 8 der Kühlkammer 6 vorgesehen sein.

Das Dosiermodul 1 weist außerdem ein Hitzeschild 16 auf, welcher wie ein Übertopf punktuell an die Außenhülse 9 der Kühlkammer 6 befestigt ist, beispielsweise durch Punktschweißen. Das Dosiermodul 1 ist in das Abgasrohr der Brennkraftmaschine eingebracht und die Austrittsöffnung 2 des Einspritzventils 5 mündet direkt in das Abgasrohr. Dies ist nur durch eine effektive Kühlung möglich, da in diesem Bereich Temperaturen von bis zu 700° C herrschen. Der Hitzeschild 16 sorgt dafür, dass das Reduktionsmittel, das aus der Austrittsöffnung 2 des Einspritzventils 5 austritt, nicht die Außenhülse 9 der Kühlkammer 6 entlang kriecht und sich durch das Kühlwasser abkühlt, sondern dass austretendes Reduktionsmittel entlang des Hitzeschilds 16 abgeführt wird, wodurch es sich nicht abkühlen kann und eine Verbrennung im Abgasrohr besser erfolgen kann. Ablagerungen innerhalb der Abgasanlage werden so vermieden bzw. erheblich minimiert.

Im Bereich einer Dichtung 15 zwischen einem Innenraum 26 des Abgasrohrs und einem Außenraum 27 des Abgasrohrs werden der Anschlussflansch 11 des Abgasrohrs und ein Flansch 20 des Dosiermoduls 1 durch eine Schelle 13 zur dichten Aufeinanderpressung des Flansches 20 und des Gegenflanschs 11 gehalten. Die Schelle 13 ist durch ein Feststellelement 14 festziehbar und kann auch wieder gelöst werden. Im Bereich der Dichtung 15 ist die Temperatur gegenüber den Abgasstromtemperaturen in der Mitte des Abgasrohrs erheblich gesenkt, da die Wärme in den Hitzeschild 10 und den Anschlussflansch 11 abgeleitet wird und sich die Temperatur hierdurch stark absenkt. Der Massenschwerpunkt 42 des Dosiermoduls 1 liegt im Bereich der Dichtung 15. Dies ist durch die abgasnahe Positionierung der wassergekühlten Ventilspitze 7 möglich.

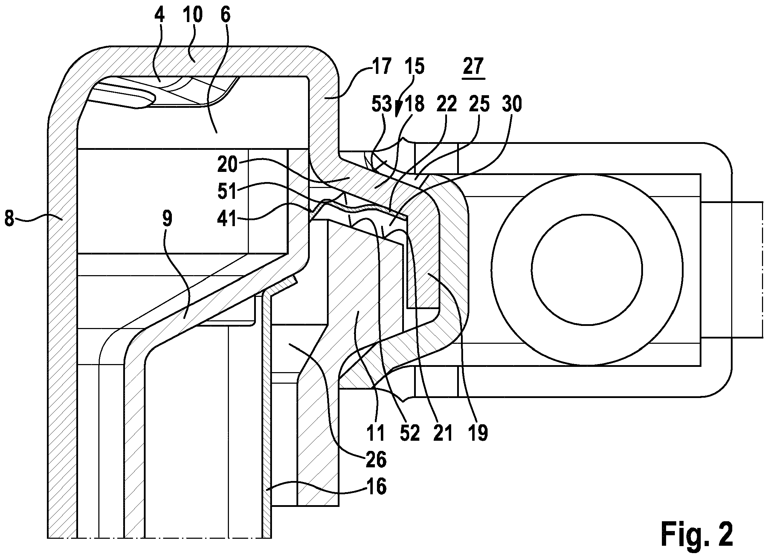

Figur 2 zeigt einen Ausschnitt aus Figur 1 mit der Dichtung 15. Die Innenhülse 8 und die Außenhülse 9 der Kühlkammer 6 werden vollständig im Tiefziehverfahren hergestellt. Der obere Rand der Innenhülse 8 ist nach außen umgestülpt und radial nach außen gezogen, so dass ein Radialabschnitt 10 ausgebildet ist, welcher einen Deckel der Kühlkammer 6 bildet. In dem Radialabschnitt 10 mündet der Zulauf 4 des Kühlfluides. Die Radialebene, in welcher der Radialabschnitt 10 verläuft, kann durch eine Austrittsöffnung des Anschlussflansches 11 definiert sein. Die Radialebene kann auch so definiert sein, dass sie im Wesentlichen senkrecht zu einer Hauptachse 28 des Einspritzventils 5 liegt.

Die Innenhülse 8 ist an den Radialabschnitt 10 anschließend im gleichen Sinn weiter um 90° gebogen, und bildet einen axial verlaufenden ersten Schürzenabschnitt 17 aus. An dem axial verlaufenden ersten Schürzenabschnitt 17 ist von innen die Außenhülse 9 der Kühlkammer 6 befestigt, bevorzugt verschweißt. An den axial verlaufenden ersten Schürzenabschnitt 17 schließt sich ein geneigter Abschnitt 18 an, dessen Innenseite eine erste Dichtfläche 51 für die Dichtung 15 bildet. Der geneigte Abschnitt 18 ist in einem Winkel von 10° bis 45°, bevorzugt 15° bis 25°, besonders bevorzugt 20° gegenüber dem Radialabschnitt 10 geneigt ausgebildet. An den geneigten Abschnitt 18 schließt sich ein axial verlaufender zweiter Schürzenabschnitt 19 an, welcher eine Zentrierung des Dosiermoduls 1 am Anschlussflansch 11 des Abgasrohrs ermöglicht.

Der Anschlussflansch 11 weist eine ebenfalls geneigte Stirnfläche 21 auf, welche eine zweite Dichtfläche 52 für die Dichtung 15 bildet. Zwischen dem geneigten Abschnitt 18 des Dosiermoduls 1 bzw. der Kühlkammer 6 und der geneigten Stirnfläche 21 des Anschlussflansches 11 ist ein Dichtelement 22 in Form einer metallischen Halbsicke angeordnet. Das Dichtelement 22 weist zumindest abschnittsweise die gleiche Neigung zwischen 10° und 45°, bevorzugt zwischen 15° und 25°, besonders bevorzugt um 20°, wie die es umgebenden Dichtflächen 51, 52 auf. Bei der Halbsicke bestimmt sich ein Sickenwinkel zwischen den geneigten Abschnitten gezwungenermaßen aus den Vorgaben an die Breite und Höhe der Halbsicke. Radial innen gelegen weist das als Halbsicke ausgebildetes Dichtelement 22 eine Haltenase 41 auf, die sich gegen eine Wand des Dosiermoduls 1, nämlich gegen die Außenhülse 9 abstützt.

Die Schelle 13 weist oberseitig und unterseitig Anpressflanken 25 auf, welche ebenfalls mit der gleichen Neigung zwischen 10° und 45°, bevorzugt zwischen 15° und 25°, besonders bevorzugt 20°, gegen die Radialebene geneigt sind, so dass sie vollflächig auf einer Außenfläche 53 des geneigten Abschnitts 18 anliegen.

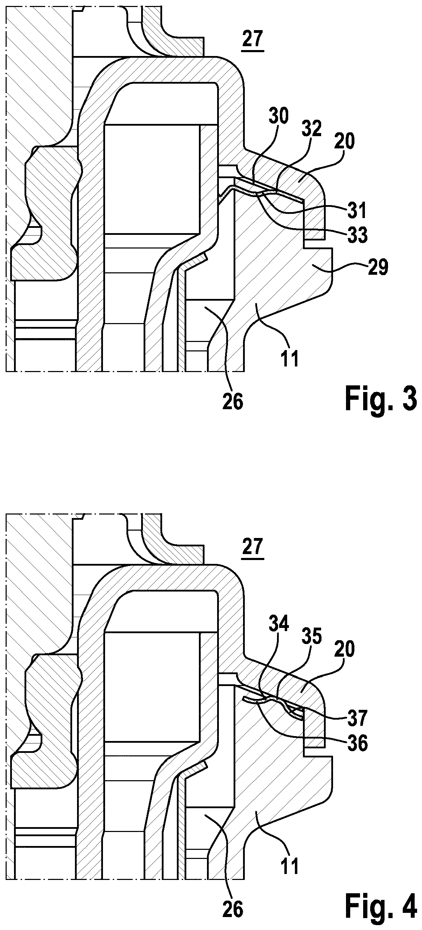

Die Figuren 3 bis 5 zeigen Ausführungsformen der Dichtung 15 mit dem Flansch 20 und dem Anschlussflansch 11. Das Dichtelement 22 ist dem Flansch 20 und dem Anschlussflansch 11 überlagert dargestellt, um dessen Form besser anzudeuten. Im Montagezustand wird sich das Dichtelement 22 natürlich in einem Spalt 30, zwischen dem Flansch 20 und dem Anschlussflansch 11 eingespannt befinden.

In der Ausführungsvariante gemäß Figur 3 ist das Dichtelement 22 eine metallische Halbsicke 31. Durch die Verspannung, welche auf die Halbsicke 31 wirkt, entsteht ein erster Mikroknick 32 in der Halbsicke 31 in Richtung auf den Flansch 20 des Dosiermoduls 1 und ein zweiter Mikroknick 33 in der Halbsicke 31 in Richtung auf den Anschlussflansch 11 des Abgasrohrs. In eingebautem Zustand bewirkt die Verspannung der Metallhalbsicke zwischen dem Flansch 20 und dem Anschlussflansch 11, dass der erste Mikroknick 32 in der Halbsicke 31 mit dem Flansch 20 des Dosiermoduls 1 eine erste Dichtlinie für den Innenraum 26 des Abgasrohrs zum Außenraum 27 bildet und der zweite Mikroknick 33 in der Halbsicke 31 mit dem Anschlussflansch 11 des Abgasrohrs eine zweite Dichtlinie für den Innenraum 26 des Abgasrohrs in den Außenraum 27 bildet, was als Liniendichtung bezeichnet wird.

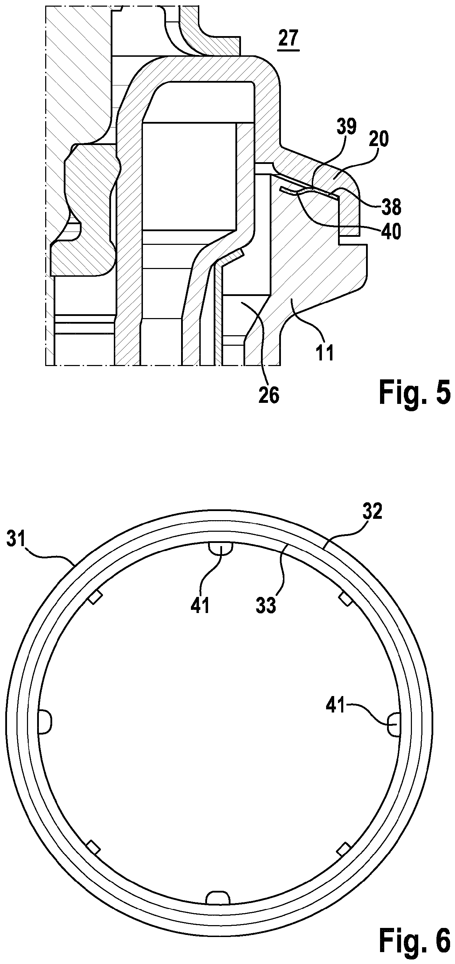

Das im Wesentlichen ringförmig ausgebildete Dichtelement 22 wird im Bereich des Massenschwerpunktes 42 des Dosiermodules 1 zwischen dem Flansch 20 des Dosiermodules 1 und dem Anschlussflansch 11 des Abgasrohres eingebracht. Bei der Verspannung des Flansches 20 und des Anschlussflansches 11 mittels einer Schelle 13 entstehen Mikroknicke 32 bzw. 33 (vergleiche Darstellung gemäß Figur 6), welche mindestens eine linienförmig verlaufende Dichtlinie zwischen dem Flansch 20 des Dosiermodules 1 einerseits und dem Anschlussflansch 11 des Abgasrohrs andererseits bilden.

Das Dichtelement 22 muss nicht notwendigerweise die Form einer metallischen Halbsicke 31 haben, es können weitere Formen vorgesehen sein, die eine Liniendichtung auf der Dichtfläche 18 des Flansches 20 und auf der Dichtfläche 21 des Anschlussflansches 12 erzeugen.

In Figur 4 ist das Dichtelement 22 als metallische Vollsicke 34 ausgeführt. In eingebautem Zustand bewirkt die Verspannung der metallischen Vollsicke 34 zwischen dem Flansch 20 und dem Anschlussflansch 11, dass eine erste Linie 35 erhöhten Drucks in der Vollsicke 34 mit dem Flansch 20 des Dosiermoduls 1 eine erste Dichtlinie für den Innenraum 26 des Abgasrohrs zum Außenraum 27 bildet, ein erster Mikroknick 36 in der Vollsicke 34 mit dem Anschlussflansch 11 des Abgasrohrs eine zweite Dichtlinie für den Innenraum 26 des Abgasrohrs zum Außenraum 27 bildet und ein zweiter Mikroknick 37 in der Vollsicke 34 mit dem Anschlussflansch 11 des Abgasrohrs eine dritte Dichtlinie für den Innenraum 26 des Abgasrohrs zum Außenraum 27 bildet, was gemeinsam als Liniendichtung bezeichnet wird.

Die in den Figuren 3 und 4 dargestellten Dichtelemente 22 können auch umgekehrt, d. h. mit der Einsickung beliebig nach oben oder nach unten, in das Dosiermodul 1 eingelegt werden, wobei die erfindungsgemäße Liniendichtung in jedem Falle sichergestellt ist.

In Figur 5 ist das Dichtelement 22 als doppellagiges Dichtelement 38 ausgeführt. In eingebautem Zustand bewirkt die Verspannung des doppellagigen Dichtelements 38 zwischen dem Flansch 20 und dem Anschlussflansch 11, dass ein erster Mikroknick 39 im doppellagigen Dichtelement 38 mit dem Flansch 20 des Dosiermoduls 1 eine erste Dichtlinie für den Innenraum 26 des Abgasrohrs zum Außenraum 27 bildet und ein zweiter Mikroknick 40 im doppellagigen Dichtelement 38 mit dem Anschlussflansch 11 des Abgasrohrs eine zweite Dichtlinie für den Innenraum 26 des Abgasrohrs zum Außenraum 27 bildet, was gemeinsam als Liniendichtung bezeichnet wird.

Figur 6 zeigt das Dichtelement 22 in der Ausführungsform als Halbsicke 31 in Draufsicht. Aufgrund der Radialsymmetrie des Flansches 20 und des Anschlussflansches 11 umfasst die Liniendichtung in diesem Ausführungsbeispiel eine erste, als erster Mikroknick 32 der Halbsicke 31 umfänglich verlaufende Linie hohen Drucks zwischen dem Dichtelement 22 und dem Flansch 20 des Dosiermoduls 1; ferner eine zweite als zweiter Mikroknick 33 der Halbsicke 31 umfänglich verlaufende Linie hohen Drucks zwischen dem Dichtelement 22 und dem Anschlussflansch 11 des Abgasrohrs, wobei die beiden umfänglich verlaufenden Linien konzentrisch angeordnet sind. Je nach Ausführungsform ist die Linie hohen Drucks zwischen dem Dichtelement 22 und dem Flansch 20 länger als die Linie hohen Drucks zwischen dem Dichtelement 22 und dem Anschlussflansch 11 des Abgasrohrs oder umgekehrt. Weiterhin sind hier beispielhaft acht im Winkel äquidistant verteilte Haltenasen 41 dargestellt, welche das Dichtelement 22 gegen die Außenhülse 9 der Kühlkammer 6 abstützen und positionieren, beispielsweise für Transportzwecke.

Das erfindungsgemäß vorgeschlagene Dosiermodul 1 kann aufgrund seiner Kühlung mit einem Kühlfluid, beispielsweise Kühlwasser weiter in das Abgasrohr der Brennkraftmaschine hineinragen, im Vergleich zu einem mit einer Luftkühlung versehenen Dosiermodul. Dieses muss aus Temperaturgründen weiter aus dem Abgasrohr herausgezogen werden, wodurch der Massenschwerpunkt eines solchen Dosiermodules weiter außen zu liegen kommt. Bei dem erfindungsgemäß vorgeschlagenen Dosiermodul 1 kann in vorteilhafter Weise die Dichtung15, d.h. das Dichtelement 22 in den Bereich der Befestigung zwischen dem Flansch 20 und dem Anschlussflansch 11 verlegt werden, so dass in vorteilhafter Weise der Massenschwerpunkt 42 und der Dichtbereich, d.h. die Position des Dichtelementes 22 zusammenfallen.

## Patentansprüche

1. Verbindungsanordnung, mit einem Dosiermodul (1) zum Einbringen eines Reduktionsmittels in einen Abgastrakt einer Verbrennungskraftmaschine zur Nachbehandlung von Abgasen, einer Schelle (13), einem Dichtelement (22) und einem Anschlussflansch (11), wobei das Dosiermodul (1) mittels der Schelle (13) an dem Anschlussflansch (11) eines Abgasrohrs des Abgastrakts befestigbar ist, wobei das Dosiermodul (1) einen Flansch (20) umfasst, der am Anschlussflansch (11) des Abgasrohres befestigt wird, wobei zwischen dem Flansch (20) und dem Anschlussflansch (11) das Dichtelement (22) angeordnet ist, **dadurch gekennzeichnet, dass** das Dichtelement (22), das einen Innenraum (26) des Abgasrohrs von einem Außenraum (27) des Abgasrohrs trennt, bezogen auf eine Längsachse (28) des Dosiermodules (1) auf Höhe des Massenschwerpunktes (42) des Dosiermoduls (1) aufgenommen ist.

2. Verbindungsanordnung gemäß dem vorhergehenden Anspruch, **dadurch gekennzeichnet, dass** das Dichtelement (22) aus einer Halbsicke (31) oder einer Vollsicke (34) ausgebildet ist.

3. Verbindungsanordnung gemäß Anspruch 1, **dadurch gekennzeichnet, dass** das Dichtelement (22) in Ringform ausgeführt ist und mindestens einen eine Liniendichtung darstellenden Mikroknick (32, 33; 36, 37) aufweist.

4. Verbindungsanordnung gemäß einem der vorhergehenden Ansprüche, **dadurch gekennzeichnet, dass** der Flansch (20) und/oder der Anschlussflansch (11) zumindest eine geneigte Dichtfläche (51, 52) aufweisen.

5. Verbindungsanordnung gemäß dem vorhergehenden Anspruch, **dadurch gekennzeichnet, dass** ein Neigungswinkel der geneigten Dichtflächen (51, 52) zwischen 10° und 45°, bevorzugt zwischen 15° und 25°, besonders bevorzugt etwa 20° gegenüber einer Radialebene beträgt.

6. Verbindungsanordnung gemäß einem der vorhergehenden Ansprüche, **dadurch gekennzeichnet, dass** der Flansch (20) und der Anschlussflansch (11) durch die Schelle (13) verbunden sind, wobei die Schelle (13) eine Anpressflanke (25) aufweist, welche auf einer Außenfläche (53) des Flansches (20), insbesondere auf einem geneigten Abschnitt (18) vollflächig aufliegt.

7. Verbindungsanordnung gemäß einem der vorhergehenden Ansprüche, **dadurch gekennzeichnet, dass** das Dichtelement (22) ein einlagiger Materialring, insbesondere ein einlagiger Metallring ist.

8. Verbindungsanordnung gemäß einem der vorhergehenden Ansprüche, **dadurch gekennzeichnet, dass** das Dichtelement (22) Haltenasen (41) aufweist, welche sich gegen eine Wand einer Außenhülse (9) des Dosiermoduls 1 abstützen.

9. Verbindungsanordnung gemäß einem der vorhergehenden Ansprüche, **dadurch gekennzeichnet, dass** das Dichtelement (22) innerhalb eines geneigten Abschnittes (18) zwischen dem Flansch (20) und dem Anschlussflansch (11) verspannt ist.

10. Verbindungsanordnung nach einem der vorhergehenden Ansprüche, **dadurch gekennzeichnet, dass** ein Hitzeschild (16) vorhanden ist, welches in Topfform ausgeführt ist und punktuell stoffschlüssig an einer Außenhülse (9), insbesondere an dieser punktverschweißt ist.

11. Verbindungsanordnung nach einem der vorhergehenden Ansprüche, **dadurch gekennzeichnet, dass** das Dichtelement einlagig ausgeführt ist.

12. Verbindungsanordnung nach einem der vorhergehenden Ansprüche, **dadurch gekennzeichnet, dass** Mittel zu dessen Kühlung mit Wasser vorgesehen sind.

## Claims

1. Connecting arrangement, having a dosing module (1) for introducing a reducing agent into an exhaust section of an internal combustion engine for exhaust aftertreatment, a clamp (13), a sealing element (22) and a connecting flange (11), wherein the dosing module (1) can be secured on the connecting flange (11) of an exhaust pipe of the exhaust section by means of the clamp (13), wherein the dosing module (1) comprises a flange (20), which is secured on the connecting flange (11) of the exhaust pipe, wherein the sealing element (22) is arranged between the flange (20) and the connecting flange (11), **characterized in that** the sealing element (22), which separates an interior (26) of the exhaust pipe from an exterior (27) of the exhaust pipe, is mounted in relation to a longitudinal axis (28) of the dosing module (1) at the height of the center of gravity (42) of the dosing module (1).

2. Connecting arrangement according to the preceding claim, **characterized in that** the sealing element (22) is formed from a half bead (31) or a full bead (34).

3. Connecting arrangement according to Claim 1, **characterized in that** the sealing element (22) is embodied in a ring shape and has at least one microbend (32, 33; 36, 37) representing a linear seal.

4. Connecting arrangement according to one of the preceding claims, **characterized in that** the flange (20) and/or the connecting flange (11) have at least one sloping sealing surface (51, 52).

5. Connecting arrangement according to the preceding claim, **characterized in that** a slope angle of the sloping sealing surfaces (51, 52) is between 10° and 45°, preferably between 15° and 25°, particularly preferably about 20°, relative to a radial plane.

6. Connecting arrangement according to one of the preceding claims, **characterized in that** the flange (20) and the connecting flange (11) are connected by the clamp (13), wherein the clamp (13) has a contact pressure flank (25), which rests in full surface contact on an outer surface (53) of the flange (20), in particular on a sloping portion (18).

7. Connecting arrangement according to one of the preceding claims, **characterized in that** the sealing element (22) is a single-layer ring of material, in particular a single-layer metal ring.

8. Connecting arrangement according to one of the preceding claims, **characterized in that** the sealing element (22) has retaining projections (41), which are supported against a wall of an outer sleeve (9) of the dosing module 1.

9. Connecting arrangement according to one of the preceding claims, **characterized in that** the sealing element (22) is clamped between the flange (20) and the connecting flange (11) within a sloping portion (18).

10. Connecting arrangement according to one of the preceding claims, **characterized in that** a heat shield (16) is present which is in the form of a pot and is attached materially at certain points to an outer sleeve (9), in particular spot-welded to the latter.

11. Connecting arrangement according to one of the preceding claims, **characterized in that** the sealing element is embodied by a single layer.

12. Connecting arrangement according to one of the preceding claims, **characterized in that** means for cooling said module with water are provided.

## Revendications

1. Dispositif d'assemblage, comprenant un module de dosage (1) pour introduire un réducteur dans une ligne d'échappement d'un moteur à combustion interne, pour le post-traitement des gaz d'échappement, un collier de serrage (13), un élément d'étanchéité (22) et une bride de raccordement (11), le module de dosage (1) pouvant être fixé au moyen du collier de serrage (13) à la bride de raccordement (11) d'un tuyau d'échappement de la ligne d'échappement, le module de dosage (1) comprenant une bride (20) qui est fixée à la bride de raccordement (11) du tuyau d'échappement, l'élément d'étanchéité (22) étant disposé entre la bride (20) et la bride de raccordement (11), **caractérisé en ce que** l'élément d'étanchéité (22) qui sépare un espace interne (26) du tuyau d'échappement d'un espace externe (27) du tuyau d'échappement, par rapport à un axe longitudinal (28) du module de dosage (1), est reçu à la hauteur du centre de gravité de masse (42) du module de dosage (1).

2. Dispositif d'assemblage selon la revendication précédente, **caractérisé en ce que** l'élément d'étanchéité (22) est réalisé à partir d'une demi-moulure (31) ou d'une moulure complète (34).

3. Dispositif d'assemblage selon la revendication 1, **caractérisé en ce que** l'élément d'étanchéité (22) est réalisé sous forme annulaire et présente au moins une microflexion (32, 33 ; 36, 37) constituant un joint d'étanchéité linéaire.

4. Dispositif d'assemblage selon l'une quelconque des revendications précédentes, **caractérisé en ce que** la bride (20) et/ou la bride de raccordement (11) présentent au moins une surface d'étanchéité inclinée (51, 52).

5. Dispositif d'assemblage selon la revendication précédente, **caractérisé en ce qu'**un angle d'inclinaison par rapport à un plan radial des surfaces d'étanchéité inclinées (51, 52) est compris entre 10° et 45°, de préférence entre 15° et 25°, particulièrement préférablement vaut environ 20°.

6. Dispositif d'assemblage selon l'une quelconque des revendications précédentes, **caractérisé en ce que** la bride (20) et la bride de raccordement (11) sont reliées par le collier de serrage (13), le collier de serrage (13) présentant un flanc de pressage (25), qui s'applique sur toute sa surface sur une surface extérieure (53) de la bride (20), en particulier sur une portion inclinée (18).

7. Dispositif d'assemblage selon l'une quelconque des revendications précédentes, **caractérisé en ce que** l'élément d'étanchéité (22) est une bague de matériau à une couche, en particulier une bague métallique à une couche.

8. Dispositif d'assemblage selon l'une quelconque des revendications précédentes, **caractérisé en ce que** l'élément d'étanchéité (22) présente des ergots de retenue (45) qui s'appuient contre une paroi d'une douille extérieure (9) du module de dosage (1).

9. Dispositif d'assemblage selon l'une quelconque des revendications précédentes, **caractérisé en ce que** l'élément d'étanchéité (22) est serré à l'intérieur d'une portion inclinée (18) entre la bride (20) et la bride de raccordement (11).

10. Dispositif d'assemblage selon l'une quelconque des revendications précédentes, **caractérisé en ce qu'**un bouclier thermique (16) est prévu, lequel est réalisé en forme de pot et est soudé ponctuellement par liaison de matière à une douille extérieure (9), en particulier est soudé par point à celle-ci.

11. Dispositif d'assemblage selon l'une quelconque des revendications précédentes, **caractérisé en ce que** l'élément d'étanchéité est réalisé sous forme de couche unique.

12. Dispositif d'assemblage selon l'une quelconque des revendications précédentes, **caractérisé en ce que** des moyens sont prévus pour son refroidissement avec de l'eau.
